# EUROPÄISCHE PATENTSCHRIFT

(11) **EP 0 477 880 B1**
(45) Veröffentlichungstag und Bekanntmachung des Hinweises auf die Patenterteilung: **19.01.1994**
(21) Anmeldenummer: 91116273.3
(22) Anmeldetag: 24.09.1991
(51) Int. Cl.: H01S 3/03

(54) **Slab- oder Bandleitergaslaser**
Slab or strip guide gas laser
Laser à gaz à guide d'onde en forme de "Slab" ou en forme de bande

(30) Priorität: 26.09.1990 DE 4030445
(43) Veröffentlichungstag der Anmeldung: 01.04.1992
(73) Patentinhaber: SIEMENS AKTIENGESELLSCHAFT, 80333 München (DE)
(72) Erfinder: Krüger, Hans, Dipl.-Phys., W-8000 München 83 (DE); Weber, Hubert, Dipl.-Phys., W-8900 Augsburg (DE)

(56) Entgegenhaltungen:
- EP-A- 0 267 304
- EP-A- 0 305 893
- EP-A- 0 451 483
- PATENT ABSTRACTS OF JAPAN, vol. 12, no. 69 (E-587)(2916) 3. März 1988;& JP-A-62 210 685

## Beschreibung

Die Erfindung betrifft einen Slab- oder Bandleitergaslaser nach dem Oberbegriff des Patentanspruchs 1. Ein derartiger Laser ist aus der DE-OS 37 29 053 bekannt. Dort sind beide Elektroden mit den Resonatorspiegeln fest verbunden.

Die Aufgabe, die der vorliegenden Erfindung zugrundeliegt, besteht in einer Verbesserung der Modenreinheit derartiger Spiegel mit geringem Aufwand. Diese Aufgabe wird durch die kennzeichnenden Merkmale des Patentanspruchs 1 gelöst. Unterschiede in der Ausdehnung der Elektroden infolge von Temperaturschwankungen führen nicht zur Verkippung der Spiegel und beeinträchtigen daher auch nicht die Modenreinheit der Laserstrahlung. Außerdem kann die erfindungsgemäße Anordnung durch eine entsprechend ausgelegte Kühlung der ersten Elektrode soweit konstant gehalten werden, daß sich die gegenseitige Lage der Spiegel auch beim Betrieb nicht ändert. Dabei bestehen die Spiegel vorteilhaft aus Metall, insbesondere Kupfer, wobei zwischen den Laserspiegeln und der zweiten Elektrode ein zur elektrischen Isolation ausreichender Abstand besteht. Die Metallspiegel können dabei durch eine elektrisch isolierende Schicht, beispielsweise Kleberschicht, mit der ersten Elektrode verbunden sein. Dies stört in vielen Fällen die Modenreinheit nicht wesentlich, insbesondere wenn die Schicht dünn ist und aus einem gut wärmeleitenden Material besteht.

Vorteilhaft besteht dabei die erste Elektrode zumindest teilweise aus einem Material mit sehr geringem Temperaturausdehnungskoeffizienten. Insbesondere läßt sich ein Aufbau gut realisieren, in dem ein erster Laserspiegel auf die erste Elektrode fest montiert und ein zweiter Laserspiegel gegenüber der ersten Elektrode in Strahlrichtung des Lasers beweglich ist, wobei der bewegliche zweite Laserspiegel durch zumindest einen Abstandshalter mit sehr geringem Temperaturausdehnungskoeffizienten in konstantem Abstand zum ersten Laserspiegel gehalten wird. Weiterhin ist eine Ausführung vorteilhaft, in der die erste Elektrode aus zwei in Strahlrichtung aneinander angrenzenden Platten zusammengesetzt ist, in der diese Platten in Strahlrichtung gegeneiander beweglich, gegen eine andere gegenseitige Lageänderung aber gesichert sind und in der der gegenseitige Abstand dieser Platten durch den Abstandgeber bestimmt ist, wobei der Abstandsgeber den gegenseitigen Abstand der Laserspiegel konstant hält. Dabei sind die Platten vorteilhaft durch in Strahlrichtung federnde Elemente miteinander verbunden.

Als Abstandgeber sind vorteilhaft parallel zu den Platten in Strahlrichtung verlaufende Stäbe, Bänder oder Drähte angeordnet. Dabei eignen sich als Materialien für die Abstandgeber beispielsweise Invar, Zerodur oder spezielle Kohlefaserstäbe. Es empfiehlt sich, die Abstandgeber vor Korrosion durch das Lasergas zu schützen. Hierzu wird vorteilhaft im Falle von Invar ein resistenter Belag, beispielsweise eine galvanisch aufgebrachte Schicht aus Nickel oder Gold oder eine plasmagespritzte Al₂O₃-Schicht aufgebracht. Bei Verwendung von Kohlefaserstäben empfiehlt sich eine Metallisierung der Oberfläche oder aber eine Kapselung in ein plasmastabiles oder plasmastabil beschichtetes Metallrohr. Das Metallrohr kann vorteilhaft aus zwei Teilen zusammengesetzt und mit einem zwischen diesen Teilen liegenden Balg versehen sein, welcher die Ausdehnungsunterschiede zwischen dem Abstandgeber und den Rohrteilen auffängt. Eine vorteilhafte Ausführungsform mit einem korrosionsgeschützten Abstandgeber zeigt die Merkmale, daß ein oder mehrere Abstandgeber in Bohrungen der Platten, aus denen die Elektroden zusammengesetzt sind, geführt sind. Dabei sind vorteilhaft die Hohlräume durch Rohre gebildet, die in Strahlrichtung verlaufen und seitlich an die Platten angrenzend angeordnet sind.

Die Erfindung wird nun anhand von vier Figuren näher erläutert. Sie ist nicht auf die in den Figuren gezeigten Beispiele beschränkt.
- FIG 1 und 2: zeigen ein erstes und die
- FIG 3 und 4: ein zweites Beispiel eines erfindungsgemäßen Bandleiterlasers schematisch in teilweise geschnittener und gebrochener Ansicht.

Eine erste Elektrode 1 ist aus zwei Platten 2 und 3 zusammengesetzt. Die Platten 2 und 3 sind durch Paßstifte 11 miteinander verbunden, wobei in der Richtung 12 des Laserstrahles die Platten 2 und 3 gegeneinander verschoben werden können. Die Platte 2 trägt Laserspiegel 4 und 5, die zur zweiten Elektrode 13 einen Spalt frei lassen, welcher zur Isolation unter Betriebsbedingungen ausreicht, und ein Fenster 6 für die Laserstrahlung. Die zweite Elektrode 13 ist über Abstandsgeber 14 mit einer Platte 2 der ersten Elektrode verbunden. Um eine stabile Halterung der zweiten Elektrode 13 zu gewährleisten, ist die Platte 2 länger ausgebildet als die Platte 3. Zwei Stäbe 10 mit sehr geringem Temperaturausdehnungskoeffizienten sind über Halterungen 7 mit den beiden Platten 2 und 3 der ersten Elektrode starr verbunden. Sie sind durch Rohrstücke 8, die von den Halterungen 7 ausgehen, und einen Balgen 9 gegenüber der Umwelt und damit gegenüber den Einflüssen des Plasmas im Betriebsfall geschützt. Die Stäbe 10 bestehen vorteilhaft aus Invar oder Zerodur oder Kohlefasern. Die Rohre 8 und der Balg 9 können aus Metall bestehen, wobei zumindest die äußere, dem Plasma zugewandte Schicht aus Nickel, Gold oder aus einer plasmagespritzten Al₂O₃-Schicht bestehen. Die genannten Schichten können auch direkt auf den Stab 10 aufgebracht sein, die Rohre 8 können in diesem Fall entfallen. Anstelle der Stäbe 10 können auch Bänder aus den genannten Materialien eingesetzt werden.

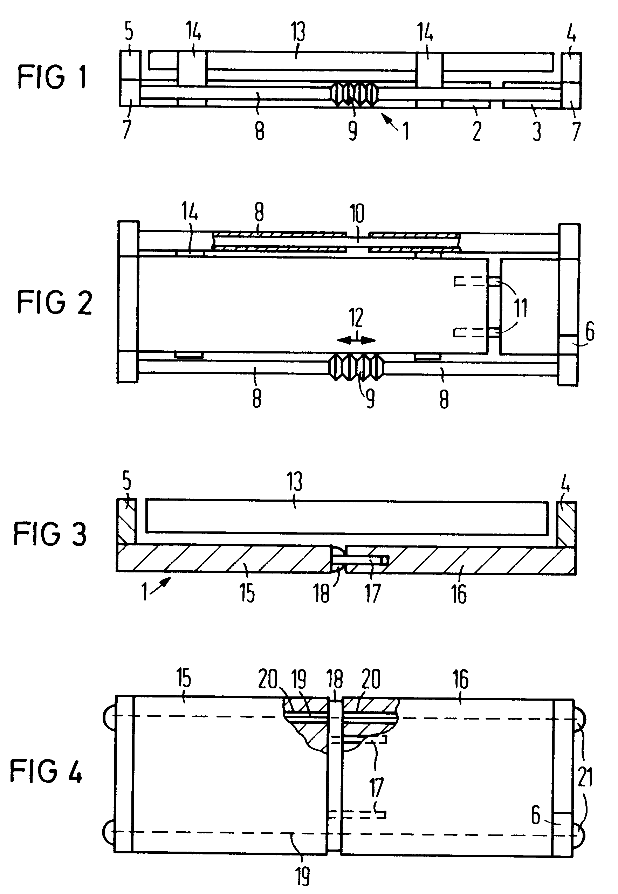

Im Beispiel der FIG 3 und 4 sind Platten 15 und 16 der ersten Elektrode 1 durch Paßstifte 17 in Strahlrichtung beweglich miteinander verbunden und werden durch eine Blattfeder 18 auseinandergedrückt. Je ein Band oder Draht 19 aus einem Material mit sehr geringem Temperaturausdehnungskoeffizienten läuft in Bohrungen 20 der Platten 15 und 16 und ist durch Spanneinrichtungen 21 gegen den Federdruck der Blattfeder 18 gespannt. So ergibt sich eine gut geschützte Anordnung des Drahtes 19 und ein kompakter Aufbau der Elektrode 1. Die Paßstifte 17 dienen bei diesem Aufbau zur Sicherung gegen ein Verkippen der Platten 16 und 17 und können durch andere mechanische Elemente ersetzt werden, die denselben Zweck erfüllen.

Die Drähte 19 bzw. die Stäbe 10 dienen als Abstandgeber für den Abstand der Spiegel. Die übrigen Teile der Elektrode, insbesondere die Platten 2 und 3 bzw. 15 und 16 können aus einem beliebigen plasmaresistenten Material bestehen. Hierzu eignet sich insbesondere Kupfer, welches den zusätzlichen Vorteil hoher Wärmeleitfähigkeit besitzt.

## Patentansprüche

1. Slab- oder Bandleitergaslaser, welcher zwei Resonatorspiegel (4,5), zwei einander gegenüber liegende Elektroden (1,13) und den Plasmaraum begrenzende, zu den Elektroden parallel verlaufende Wellenleiterflächen enthält, wobei eine erste Elektrode (1) mit den Spiegeln (4,5) in einer festen Winkellage verbunden ist, **dadurch gekennzeichnet,** daß die erste Elektrode (1) die Spiegel (4,5) trägt und daß eine zweite Elektrode (13) gegenüber der ersten mechanisch fixiert, aber ohne Berührung zu den Laserspiegeln (4,5) angeordnet ist.

2. Gaslaser nach Anspruch 1, **dadurch gekennzeichnet,** daß die Laserspiegel aus Metall, insbesondere Kupfer bestehen und daß zwischen den Laserspiegeln und der zweiten Elektrode ein zur elektrischen Isolation ausreichender Abstand besteht.

3. Gaslaser nach einem der Ansprüche 1 oder 2, **dadurch** **gekennzeichnet**, daß die erste Elektrode zumindest teilweise aus einem Material mit sehr geringem Temperaturausdehnungskoeffizienten besteht.

4. Gaslaser nach Anspruch 3, **dadurch gekennzeichnet,** daß ein erster Laserspiegel auf der ersten Elektrode fest montiert ist, daß ein zweiter Laserspiegel gegenüber der ersten Elektrode in Strahlrichtung des Lasers beweglich ist und daß der bewegliche zweite Laserspiegel durch zumindest einen Abstandsgeber mit sehr geringem Temperaturausdehnungskoeffizienten in konstantem Abstand zum ersten Spiegel gehalten wird.

5. Gaslaser nach Anspruch 3, **dadurch gekennzeichnet,** daß die erste Elektrode aus zwei in Strahlrichtung aneinander angrenzenden Platten zusammengesetzt ist, daß diese Platten in Strahlrichtung gegeneinander beweglich, gegen eine andere gegenseitige Lageänderung aber gesichert sind und daß der gegenseitige Abstand dieser Platten durch einen Abstandgeber mit einem sehr geringen Temperaturausdehnungskoeffizienten bestimmt ist, der den gegenseitigen Abstand der Laserspiegel konstant hält.

6. Gaslaser nach Anspruch 5, **dadurch gekennzeichnet,** daß die Platten durch in Strahlrichtung federnde Elemente miteinander verbunden sind.

7. Gaslaser nach einem der Ansprüche 5 oder 6, **dadurch** gekennzeichnet, daß parallel zu den Platten in Strahlrichtung verlaufende Stäbe, Bänder oder Drähte als Abstandgeber angeordnet sind.

8. Gaslaser nach einem der Ansprüche 5 bis 6, **dadurch** gekennzeichnet, daß die Abstandsgeber vor einer durch das Lasergas bedingten Korrosion geschützt sind.

9. Gaslaser nach einem der Ansprüche 4 bis 8, **dadurch** gekennzeichnet, daß die Abstandgeber in Bohrungen der ersten Elektrode geführt sind.

10. Gaslaser nach einem der Ansprüche 5 bis 8, **dadurch** gekennzeichnet, daß die Abstandgeber in Hohlräumen geführt sind, daß diese Hohlräume zu zwei gegeneinander beweglichen Platten der ersten Elektrode gehören und daß jeweils zwei Hohlräume durch einen Balg miteinander verbunden und zum Entladungsraum hin gasdicht abgeschlossen sind.

11. Gaslaser nach Anspruch 10, **dadurch gekennzeichnet,** daß die Hohlräume durch Rohre gebildet sind, die in Strahlrichtung verlaufen und seitlich an die Platten angrenzend angeordnet sind.

12. Gaslaser nach Anspruch 8, **dadurch gekennzeichnet,** daß der Abstandgeber aus Invar oder Zerodur besteht und daß zum Schutz vor Korrosion eine Schicht aus Ni, Au oder plasmagespritztem Al₂O₃ auf den Abstandsgeber aufgebracht ist.

## Claims

1. Slab or stripline gas laser, which includes two resonator mirrors (4, 5), two mutually opposite electrodes (1, 13) and waveguide surfaces which bound the plasma space and extend parallel to the electrodes, a first electrode (1) being connected to the mirrors (4, 5) at a fixed angular position, characterized in that the first electrode (1) carries the mirrors (4, 5), and in that a second electrode (13) is mechanically fixed relative to the first, but is disposed without contact with the laser mirrors (4, 5).

2. Gas laser according to Claim 1, characterized in that the laser mirrors comprise metal preferably copper, and in that a spacing sufficient for electrical insulation exists between the laser mirrors and the second electrode.

3. Gas laser according to one of Claims 1 or 2, characterized in that the first electrode at least partially comprises a material having a very low coefficient of thermal expansion.

4. Gas laser according to Claim 3, characterized in that a first laser mirror is fixedly mounted on the first electrode, in that a second laser mirror is movable relative to the first electrode in the beam direction of the laser, and in that the movable second laser mirror is maintained at a constant spacing from the first mirror by at least one spacer having a very low coefficient of thermal expansion.

5. Gas laser according to Claim 3, characterized in that the first electrode is composed of two plates which adjoin one another in the beam direction, in that these plates are movable relative to one another in the beam direction but are secured against any other change of relative position, and in that the mutual spacing of these plates is determined by a spacer having a very low coefficient of thermal expansion, which spacer maintains the mutual spacing of the laser mirrors constant.

6. Gas laser according to Claim 5, characterized in that the plates are connected to one another by elements which are resilient in the beam direction.

7. Gas laser according to one of Claims 5 or 6, characterized in that rods, strips or wires extending parallel to the plates in the beam direction are disposed as spacers.

8. Gas laser according to one of Claims 5 to 6, characterized in that the spacers are protected against corrosion caused by the laser gas.

9. Gas laser according to one of Claims 4 to 8, characterized in that the spacers are guided in bores of the first electrode.

10. Gas laser according to one of Claims 5 to 8, characterized in that the spacers are guided in cavities, in that these cavities are provided in two mutually movable plates of the first electrode, and in that in each instance two cavities are connected to one another by a bellows and are sealed off in a gasproof manner from the discharge space.

11. Gas laser according to Claim 10, characterized in that the cavities are formed by tubes which extend in the beam direction and are disposed laterally adjoining the plates.

12. Gas laser according to Claim 8, characterized in that the spacer comprises Invar or Zerodur, and in that a layer of Ni, Au or plasma-sprayed Al₂O₃ is applied to the spacer to provide protection against corrosion.

## Revendications

1. Laser gaz à guide d'ondes en forme de "slab" ou en forme de bande, qui comporte deux miroirs (4,5) formant résonateurs, deux électrodes (1,13) mutuellement opposées et des surfaces guides d'ondes délimitant la chambre du plasma et s'étendant parallèlement aux électrodes, une première électrode (1) étant reliée aux miroirs (4,5) suivant une position angulaire fixe, caractérisé en ce que la première électrode (1) porte les miroirs (4,5) et en ce qu'une seconde électrode (13) est immobilisée mécaniquement par rapport à la première, mais est montée sans contact avec les miroirs (4,5) du laser.

2. Laser à gaz suivant la revendication 1, caractérisé en ce que les miroirs du laser sont en métal, notamment en cuivre, et en ce que, entre les miroirs du laser et la seconde électrode, il existe un intervalle suffisant pour une isolation électrique.

3. Laser à gaz suivant la revendication 1 ou 2, caractérisé en ce que la première électrode est au moins en partie en un matériau ayant un coefficient de dilatation thermique très petit.

4. Laser à gaz suivant la revendication 3, caractérisé en ce qu'un premier miroir du laser et monté fixe sur la première électrode, en ce qu'un second miroir du laser est mobile par rapport à la première électrode dans la direction de rayonnement du laser et en ce que le second miroir mobile du laser est maintenu par au moins une entretoise ayant un coefficient de dilatation thermique très petit, à une distance constante du premier miroir.

5. Laser à gaz suivant la revendication 3, caractérisé en ce que la première électrode est composée de deux plateaux adjacents dans la direction de rayonnement, en ce que ces plateaux sont mobiles l'un par rapport à l'autre dans la direction du rayonnement, mais sont empêchés de changer mutuellement de position l'un par rapport à l'autre, et en ce que la distance mutuelle de ces plateaux est déterminée par une entretoise ayant un coefficient de dilatation thermique très petit et maintenant à une valeur constante la distance mutuelle entre les miroirs du laser.

6. Laser à gaz suivant la revendication 5, caractérisé en ce que les plateaux sont reliés entre eux par des éléments élastiques dans la direction du rayonnement.

7. Laser à gaz suivant l'une des revendications 5 ou 6, caractérisé en ce qu'il est prévu, parallèlement aux plateaux, des barreaux, des bandes ou des fils, qui s'étendent dans la direction du rayonnement et qui servent d'entretoises.

8. Laser à gaz suivant l'une des revendications 5 à 6, caractérisé en ce que les entretoises sont protégées de la corrosion due aux gaz du laser.

9. Laser à gaz suivant l'une des revendications 4 à 8, caractérisé en ce que les entretoises sont guidées dans des trous de la première électrode.

10. Laser à gaz suivant l'une des revendications 5 à 8, caractérisé en ce que les entretoises sont guidées dans des cavités, en ce que ces cavités font partie de deux plateaux mobiles l'un par rapport à l'autre de la première électrode et en ce que deux cavités communiquent entre elles par un soufflet et sont fermées de manière étanche aux gaz par rapport à la chambre de décharge.

11. Laser à gaz suivant la revendication 10, caractérisé en ce que les cavités sont formées de tubes qui s'étendent dans la direction de rayonnement et qui sont disposés de manière adjacente latéralement aux plateaux.

12. Laser à gaz suivant la revendication 8, caractérisé en ce que l'entretoise est en Invar ou en Zerodur, et en ce que, pour la protéger de la corrosion, une couche en Ni, en Au ou en Al₂O₃ est projetée au plasma sur l'entretoise.
